# EUROPÄISCHE PATENTSCHRIFT

(11) **EP 0 691 876 B1**
(45) Veröffentlichungstag und Bekanntmachung des Hinweises auf die Patenterteilung: **16.04.1997**
(21) Anmeldenummer: 94902665.2
(22) Anmeldetag: 02.12.1993
(51) Int. Cl.: B01D 27/10

(54) **FILTERVORRICHTUNG MIT VERSCHLUSSEINRICHTUNG UND KEYPORTANSCHLUSS**
FILTER DEVICE WITH CLOSURE AND KEY PORT CONNECTION
DISPOSITIF DE FILTRATION MUNI D'UN SYSTEME DE FERMETURE ET D'UN RACCORDEMENT A ORIFICE DE SECURITE

(30) Priorität: 31.03.1993 DE 4310492
(43) Veröffentlichungstag der Anmeldung: 17.01.1996
(73) Patentinhaber: HYDAC FILTERTECHNIK GmbH, D-66273 Sulzbach (DE)
(72) Erfinder: SANN, Norbert, D-66113 Saarbrücken (DE); HAUSDORF, Jürgen, D-66130 Saarbrücken (DE)
(74) Vertreter: Patentanwälte Bartels und Partner
(86) Internationale Anmeldenummer: EP9303394
(87) Internationale Veröffentlichungsnummer: WO9422548

(56) Entgegenhaltungen:
- EP-A- 0 322 828
- EP-A- 0 492 627
- DE-A- 3 031 431
- DE-B- 2 623 409
- US-A- 3 167 507

## Beschreibung

Die Erfindung betrifft eine Filtervorrichtung mit einem Anschlüsse für ein Fluid aufweisenden Gehäuse, das mit einem Filtertopf verbindbar ist, der mindestens ein von einer Elementaufnahme festgehaltenes Filterelement aufweist, und mit einer Verschlußeinrichtung, die einen ungewollten Fluidaustritt verhindert.

Bei dahingehenden Filtervorrichtungen wird verunreinigtes Fluid über einen Zulauf in den Filtertopf mit dem jeweiligen Filterelement geführt, das von außen nach innen durchflossen wird und hierbei die Schmutzteile aus dem Fluid abscheidet. Das derart gereinigte Fluid gelangt über das Innere des Filterelementes und den zugeordneten Ablauf im Filtergehäuse zu den zu versorgenden Verbraucherstellen im Hydraulik-Kreislauf.

Mit Zunahme der Einsatzdauer des jeweiligen Filterelementes ist dieses derart verunreinigt, daß es gegen ein neues Filterelement ausgetauscht werden muß. Hierzu wird üblicherweise der Filtertopf mit dem in ihm angeordneten Filterelement vom Gehäuse abgeschraubt und mithin entfernt. Bei diesem Abschrauben wird die Elementaufnahme häufig radial mitbewegt und der zwischen Elementaufnahme und den Gehäuseteilen vorgesehene Dichtring kann hierbei beschädigt werden. Insbesondere kommt es im umgekehrten Fall nach Austauschen des Filterelementes und erneutem Einsetzen des Filtertopfes in das Gehäuse durch das Ein- oder Aufschrauben zu Quetsch-, Drill- und Verschiebebewegungen des Dichtringes, was die Dichtwirkung beeinträchtigt, so daß ungefiltertes Fluid mit bereits gefiltertem Fluid sich vermischt. Da der Filtertopf selbst beim Wechselvorgang mit Fluid, wie Hydrauliköl, schwer entflammbaren Flüssigkeiten, biologisch abbaubaren Flüssigkeiten oder verschmutztem Wasser, befüllt ist, gelangt häufig Fluid ungewollt ins Freie und führt zu einer Verschmutzung der Umgebung, was vor allem dann vorkommt, wenn bei Arbeitsmaschinen die dahingehenden Wechselvorgänge im Freien stattfinden.

Durch die gattungsgemäßen Filtervorrichtungen nach der DE 30 31 431 C2 und der DE-OS 26 23 409 sind Verschlußeinrichtungen bekannt, die als Rückströmsperrventile aus elastomerem Material gebildet sind, die als einstückiges Flanschteil ringförmig die jeweilige Elementaufnahme für das Filterelement umschließen. Sobald über einen der Anschlüsse in Form eines Zulaufs Fluid zugeführt wird, öffnet das elastisch nachgiebige flanschförmige Ventil, das ansonsten aufgrund seiner Elastizität in seiner Schließstellung gehalten einen ungewollten Fluidaustritt in Richtung des jeweiligen Anschlusses oder bei entferntem Filtertopf aus diesem in die Umgebung vermeidet. Ein Verschließen der fluidführenden Anschlüsse im Gehäuse der Vorrichtung ist nicht vorgesehen. Die bekannten Verschlußeinrichtungen benötigen im Bereich der Elementaufnahme viel Einbauraum und sind im Betrieb nicht immer funktionssicher. Insbesondere bei hohen Druckspitzen in den Anschlüssen oder auch bei einer ungewollten Umkehr der Fluidströmrichtung ist ein Umstülpen oder Einreißen des tellerartigen Elastomer-Dichtrandes des jeweiligen Flanschteiles und mithin ein Unbrauchbarwerden der Verschlußeinrichtung nicht auszuschließen. Letzteres führt zum Ausfall der Filtervorrichtung.

Ausgehend von diesem Stand der Technik liegt der Erfindung die Aufgabe zugrunde, eine Filtervorrichtung zu schaffen, die eine universell einsetzbare Verschlußeinrichtung aufweist, die kostengünstig herstellbar ist, einen geringen Einbauraum benötigt und funktionssicher im Betrieb ist. Eine dahingehende Aufgabe löst eine Filtervorrichtung mit den Merkmalen des Anspruches 1.

Dadurch, daß gemäß dem kennzeichnenden Teil des Anspruches 1 die Verschlußeinrichtung mindestens zwei Schließplatten aufweist, die in zwei verschiedenen Ebenen zueinander versetzt angeordnete Durchlässe zumindest teilweise begrenzen, und die unter der Einwirkung eines Kraftspeichers zwecks Verschließen der Durchlässe derart aufeinander zubewegbar sind, daß mit zunehmender Trennung des Filtertopfes vom Gehäuse die Verschlußeinrichtung kontinuierlich mindestens einen der Anschlüsse und/oder den Filtertopf gegenüber der Umgebung dichtend verschließt, benötigt die Verschlußeinrichtung innerhalb der Vorrichtung nur einen geringen Einbauraum. So ist der Verfahrweg der im wesentlichen ebenen Schließplatten von der Offen- in die Schließstellung und umgekehrt gering gehalten und es kommt aufgrund der linearen, gleichförmigen Bewegung der Schließplatten zu einem funktionssicheren störungsfreien Betrieb. Mit der Verschlußeinrichtung lassen sich sowohl die Anschlüsse im Gehäuse als auch zusätzlich oder alternativ der Filtertopf gegenüber der Umgebung im Hinblick auf einen ungewollten Fluidaustritt hermetisch dichtend abschließen, so daß die erfindungsgemäße Filtervorrichtung universell einsetzbar ist. Mit der beschriebenen Verschlußeinrichtung ist eine Art Plattenventil verwirklicht, das äußerst funktionssicher dichtend schließt und in jedem möglichen Betriebszustand zuverlässig arbeitet.

In der Art eines geschlossenen Recycling-Kreislaufes kann der derart verschlossene Filtertopf mit dem verschmutzten Filterelement an den Hersteller zurückgesandt werden, der dann die geeignete Entsorgung vornimmt und wiederverwendbare Teile, wie beispielsweise den Filtertopf, nach einer entsprechenden Reinigung für Neugeräte oder als neu einzusetzendes Austauschteil weiter verwertet.

Bei einer bevorzugten Ausführungsform der erfindungsgemäßen Filtervorrichtung weist die Verschlußeinrichtung ein Rückschlagventil auf, das im Ablauf eingesetzt während des Filtervorganges öffnet und mit dem Entfernen des Filtertopfes sich schließt. Hierdurch ist auch bei einem möglichen Rückfluß von Fluid aus dem Ablauf in Richtung des Filterelementes ein hermetischer Abschluß gewährleistet.

Bei einer anderen bevorzugten Ausführungsform der erfindungsgemäßen Filtervorrichtung weist die Verschlußeinrichtung zwei Abstützteile mit Durchgängen auf, die in Strömungsrichtung des Fluides hintereinander angeordnet sind, wobei jedem Abstützteil zugeordnet ein Schließteil vorhanden ist, das mittels dem anderen Schließteil, entgegen der Kraft eines Kraftspeichers, in seiner die Durchgänge freigebenden Stellung gehalten ist und wobei mit Entfernen des Filtertopfes das eine Schließteil den als Ablauf dienenden Anschluß und das andere Schließteil das Innere des Filterelementes gegenüber der Umgebung dichtend verschließt. Hierdurch ist in vorteilhafter Weise eine Art Zwangskopplung zwischen zwei Schließteilen gegeben, die ein synchrones Öffnen oder Verschließen sowohl eines Gehäuseanschlusses als auch des Anschlusses mit der Elementaufnahme ermöglicht. Da die Durchgänge der Abstützteile in Fluidrichtung hintereinander angeordnet sind, ist der Durchflußwiderstand für das Fluid herabgesetzt.

Bei einer besonders bevorzugten Ausführungsform der erfindungsgemäßen Filtervorrichtung ist es vorgesehen, daß für das jeweilige Filterelement die Elementaufnahme eine Formschlußverbindung mit Teilen des Gehäuses über eine Verdrehsicherung eingeht. Bei einem Austauschvorgang des Filtertopfes mit dem Filterelement wird die Elementaufnahme allein axial längs der Verdrehrichtung verschoben, so daß die Schließplatten mit ihren Durchlaßöffnungen ohne zeitaufwendige Einstellarbeiten seitens der Bedienperson ihre zueinander versetzt angeordnete Einbaulage genau einnehmen, um anschließend in dieser versetzten Einbaulage den funktionssicheren Betrieb aufzunehmen.

Weitere bevorzugte Ausgestaltungen der erfindungsgemäßen Filtervorrichtung sind Gegenstand der Unteransprüche.

Im folgenden ist die erfindungsgemäße Filtervorrichtung anhand verschiedener Ausführungsbeispiele gemäß der Zeichnung näher erläutert.

Es zeigen:
- Fig.1: in prinzipieller Darstellung einen Längsschnitt eines ersten Ausführungsbeispieles der Filtervorrichtung;
- Fig.2: eine Draufsicht auf eine im Ablauf eingesetzte Verschlußeinrichtung in Richtung des Pfeiles II in Fig.1;
- Fig.3 und 3a: eine Draufsicht bzw. einen Längsschnitt einer Verschlußeinrichtung in Form eines Plattenventiles;
- Fig.4 und 4a: eine Draufsicht bzw. einen Längsschnitt einer Verdrehsicherung für das Filterelement;
- Fig.5: einen Längsschnitt durch das Kopfteil eines zweiten Ausführungsbeispieles der Filtervorrichtung;
- Fig.6: einen Längsschnitt durch das Kopfteil eines dritten Ausführungsbeispieles der Filtervorrichtung;
- Fig.7: eine Draufsicht auf eine weitere Ausführungsform eines Plattenventiles;
- Fig.8 und 8a: eine Unteransicht bzw. einen Längsschnitt eines Schließteiles einer Verschlußeinrichtung nach der Fig. 7;
- Fig.9: einen Längsschnitt eines für das Schließteil nach den Fig. 8,8a vorgesehenen Abstützteiles;
- Fig.10: eine Draufsicht einer Verschlußeinrichtung bestehend aus dem Schließteil und dem Abstützteil nach den Fig. 8,8a, und 9.

Die erfindungsgemäße Filtervorrichtung weist ein Gehäuse 10 auf, das mit einem Zulauf 12 und mit einem Ablauf 14 zum Führen eines Fluids versehen ist. Das Gehäuse 10 ist mit einem Filtertopf 16 verbindbar, der ein von einer Elementaufnahme 18 festgehaltenes Filterelement 20 aufweist. Dahingehende Filtervorrichtungen sind der Fachwelt hinreichend bekannt, so daß auf Einzelheiten nur noch insoweit eingegangen wird, als dies zum Verständnis der Erfindung notwendig ist.

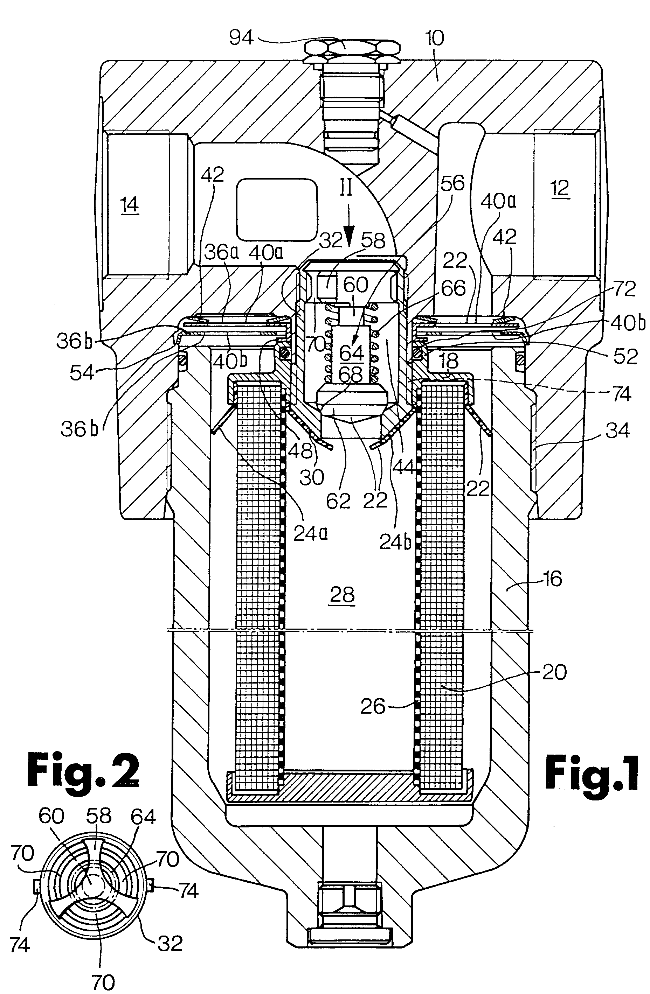

Eine als Ganzes mit 22 bezeichnete Verschlußeinrichtung weist bei dem ersten Ausführungsbeispiel zwei ringförmige Dichtlappen 24a und 24b auf, die zwischen der Elementaufnahme 18 und dem Außenumfang des Filterelementes 20 bzw. an dem stegartigen Innenumfang der Elementaufnahme 18 mit einem Ende fest angeordnet sind. Der in der Fig.1 dargestellte äußere Dichtlappenring 24a ist in Schließstellung gezeichnet, wobei die dahingehende Verschlußeinrichtung 22 öffnet, sobald ein Fluiddruck am Zulauf 12 ensteht. Mit dem Öffnen des Dichtlappens 24a gelangt dann ungefiltertes Fluid über den Außenumfang des Filterelementes 20 sowie ein perforiertes Stützgitter 26 in das Innere 28 des Filterelementes 20. Etwaige Verunreinigungen verbleiben im Filterelement 20 und das im Innenraum 28 befindliche Fluid ist demgemäß gereinigt.

Der innere Dichtlappenring 24b stützt sich an dem Konus 30 einer Verdrehsicherung 32 ab. Wird nun der Filtertopf 16 durch Herausschrauben über das Gewinde 34 von dem sonstigen Gehäuse 10 getrennt und ist die Fluidzufuhr über den Zulauf 12 beendet, legen sich die elastisch nachgiebigen Dichtlappen 24a,b, insbesondere aus Gummimaterial, aufgrund ihrer Eigenspannung wiederum an den Innenumfang des Filtertopfes 16 bzw. mittig aneinander an und schließen mithin das Innere 28 des Filtertopfes 16, der zumindest teilweise mit ungereinigtem Fluid befüllt ist, gegenüber der Umgebung hermetisch ab. Der Schließvorgang der Dichtlappen 24a,b geht kontinuierlich vonstatten und die Verschlußeinrichtung 22 schließt automatisch die möglichen Durchtrittsstellen ab. Wird ein neues Filterelement 20 eingesetzt, indem der Filtertopf 16 über das Gewinde 34 in das Gehäuse 10 eingeschraubt wird, wird der innere Dichtlappenring 24b über den Konus 30 der Verdrehsicherung 32 aufgestoßen und der Dichtlappenring 24a durch die Fluidzufuhr über den Zulauf 12 geöffnet.

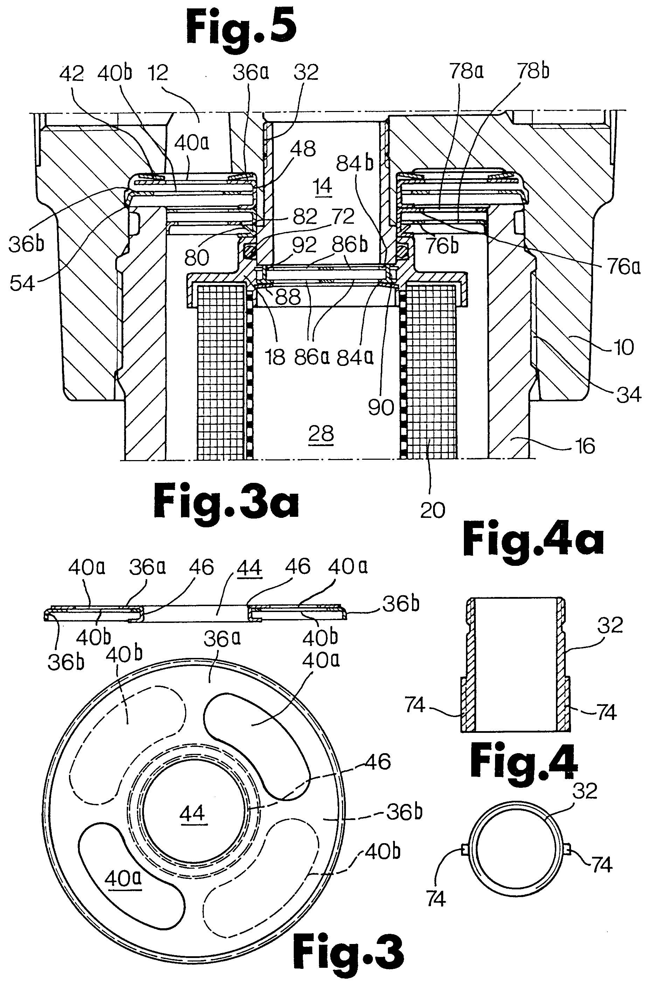

Die Verschlußeinrichtung 22 verschließt zusätzlich die Anschlüsse in Form eines Zu- 12 und eines Ablaufes 14 nach Entfernen des Filtertopfes 16 automatisch. Hierzu weist die angesprochene Verschlußeinrichtung 22 zwei Schließplatten 36a,b in Form zweier Scheiben auf, die in zwei verschiedenen Ebenen zueinander versetzt angeordnete Durchlässe 40a,b (Fig. 3) aufweisen und die unter der Einwirkung eines Kraftspeichers in Form eines ringförmigen Tellerfederelementes 42 beim Entfernen des Filtertopfes 16 zwecks Verschließen der Durchlässe 40a,b aufeinander zubewegbar sind. Hierdurch ist eine Art Plattenventil gegeben, wie es in den Fig.3 und 3a näher dargestellt ist. Die Fig.3 zeigt dem Betrachter zugewandt die obere Scheibe 36a mit den beiden diametral einander gegenüberliegenden Öffnungen 40a. Dem Betrachter abgewandt und durch die Scheibe 36a abgedeckt befindet sich darunter in einer zweiten Ebene die Scheibe 36b mit um 90° versetzt zu den Durchlässen 40a angeordneten Durchlässen 40b. In der Mitte der beiden Scheiben 36a,b befindet sich eine kreisrunde Ausnehmung 44, in die die hülsenartige Verdrehsicherung 32 längs ihres Außenumfanges eingreift.

Wie dies insbesondere die Fig.1 und 3a zeigen, weist die obere der beiden Scheiben 36a, die bewegbar längs der durch den Innenrand der Scheibe 36b gebildeten Führung geführt ist, randseitig und der Ausnehmung 44 zugewandt eine Begrenzung auf. Im Ausführungsbeispiel gemäß der Fig.1 ist die Begrenzung aus einem Anschläge bildenden U-förmigen Winkelprofil 48 gebildet. Die obere der beiden Scheiben 36a stützt sich, wie dies die Fig.1 zeigt, mit ihrer Oberseite auf der Tellerfeder 42 ab, die derart gewählt ist, daß sie die Durchlässe 40a keinesfalls abdeckt. Die Tellerfeder 42 stützt sich wiederum am Gehäuse 10 ab und die Scheibe 36a wird unter ihrem Einfluß über das Winkelprofil 48 gegen eine Vorkragung 52 der ringartigen Elementaufnahme 18 gedrückt und mithin in ihrer Lage arretiert. Die andere fest angeordnete Scheibe 36b ist an ihrem der Ausnehmung 44 abgekehrten Ende nach unten hin (Fig.1) abgekröpft und stützt sich mit ihrem freien Ende an der Stelle der Abkröpfung längs eines Absatzes 54 innerhalb des Gehäuses 10 ab. Wird wiederum der bereits angesprochene Elementwechsel durchgeführt, mithin also der Filtertopf 16 zunächst entfernt, drückt die Tellerfeder 42 die bewegbare Scheibe 36a gegen die feststehende Scheibe 36b und verschließt mithin hermetisch die Durchlässe 40a,b. Selbst bei großen anstehenden Drücken im Fluidzulauf 12 wirken diese in Richtung des Krafteinflusses der Tellerfeder 42 und unterstützen mithin einen hermetisch dichtenden Verschluß der Verschlußeinrichtung 22 in Form des Plattenventils mit seinen beiden Scheiben 36a,b.

Die Verschlußeinrichtung 22 weist darüber hinaus ein Rückschlagventil 56 auf, das im Ablauf 14 eingesetzt während des Filtervorganges öffnet und mit dem Entfernen des Filtertopfes 16 sich schließt. Das Rückschlagventil 56 stützt sich auf einem Dreibein 58 ab, wie es in der Fig.2 näher dargestellt ist und das mit dem Gehäuse 10 fest verbunden ist. An der Verbindungsstelle der Beine des Dreibeines 58 ist ein Längszapfen 60 angeordnet, auf dem längsverfahrbar ein spitz zulaufender Ventilkörper 62 über einen hülsenartigen Längsfortsatz 64 geführt ist. Über eine Schließfeder 66 wird, sofern kein entsprechender Fluiddruck im Innenraum 28 ensteht, der Ventilkörper 62 mit seinen konischen Schließflächen gegen einen Ventilsitz 68, der Teil der Verdrehsicherung 32 ist, gedrückt.

Mit zunehmendem Fluiddruck im Innenraum 28 öffnet bei einem vorgebbaren Schwellenwert das Rückschlagventil 56 und das Fluid strömt über den Innenraum 28 durch die Verdrehsicherung 32 und die drei Durchtrittsstellen 70 zwischen den Beinen des Dreibeines 58 in den Ablauf 14. Die Verschlußeinrichtung 22 schließt, sobald der Druck im Innenraum 28 des Filtertopfes 16 den vorgegebenen Schwellenwert unterschreitet. Dies kann unter anderem beim Entfernen des Filtertopfes 16 und mithin Schließen des Plattenventiles 36a,b geschehen. Ferner schließt das Rückschlagventil 56, wenn der Innendruck im Ablauf 14 beispielsweise durch unvorhergesehene Druckspitzen im Hydraulikkreislauf größer wird als der über den Fluiddruck im Zulauf 12 erzeugte Druck im Innenraum 28. Dahingehende Druckspitzen lassen sich dann sicher abfangen, was das jeweilige im Einsatz befindliche Filterelement 20 schont.

Wie die Fig.1 zeigt, ist in einer nutförmigen Ausnehmung innerhalb der Vorkragung 52 der Elementaufnahme 18 und der Ausnehmung 44 zugewandt ein O-Ring 72 angeordnet, der in Anlage mit Teilen des Gehäuses 10 ist und mithin den Zulauf 12 gegenüber dem Inneren 28 des Filtertopfes 16 dichtend verschließt. Ist der O-Ring 72 defekt oder nicht lagegenau eingesetzt, kommt es zu Störungen der Filtervorrichtung, die die Filtrierleistung beeinträchtigen und deren Ursache auch von einem Wartungsfachmann nicht ohne weiteres zu finden ist. Um den O-Ring 72 möglichst gleichförmig aufzuschieben und an seine vorgegebene Stelle zu bringen, geht für das jeweilige Filterelement 20 die Elementaufnahme 18 eine Formschlußverbindung mit Teilen des Gehäuses 10 über die Verdrehsicherung 32 ein.

Hierzu weist die Formschlußverbindung eine oder zwei einander diametral gegenüberliegende Ausnehmungen (nicht dargestellt) an der Elementaufnahme 18 auf, in die jeweils zugeordnet die beiden Vorsprünge 74 der Verdrehsicherung 32 eingreifen. Wie insbesondere die Fig.4a zeigt, sind der eine oder zwei einander gegenüberliegend angeordneten Vorsprünge 74 als Längsführungen ausgebildet, längs deren beim radialen Verdrehen des Filtertopfes 16 die Elementaufnahme 18 axial geführt ist. Dank dieser Führung ist auch ein Verkanten oder ein schräges Aufsetzen des Filterelementes 20 ausgeschlossen.

Ferner ist die angesprochene Formschlußverbindung notwendig, um zu vermeiden, daß beim Ein- und Ausschrauben des Filtertopfes 16 die beiden Scheiben 36a,b des Plattenventiles sich gegeneinander verdrehen, was zur Funktionsunfähigkeit der erfindungsgemäßen Filtervorrichtung führen könnte. Mit der angesprochenen Formschlußverbindung über ein Nut-Zapfen-System ist eine sog. Keyportanschlußtechnik verwirklicht, mit der gewährleistet ist, daß Betreiber der Filtervorrichtung nicht herstellerfremde Filterelemente einsetzen können, die üblicherweise zusammen mit der Elementaufnahme, allerdings ohne Innenführung, auf dem Markt frei erhältlich sind, denn dahingehende bekannte Filterelemente, die sich zusammen mit dem Filtertopf beim Ein- und Ausschrauben mitdrehen, würden das Plattenventil unbrauchbar werden lassen.

Ein weiteres Ausführungsbeispiel der erfindungsgemäßen Filtervorrichtung ist in Fig.5 dargestellt. Der Einfachheit halber werden die folgenden Ausführungsformen nur noch insofern erläutert, als sie sich von der jeweils vorhergehenden wesentlich unterscheiden. Für dieselben Teile werden im wesentlichen die gleichen Bezugsziffern, wie im jeweils vorangegangenen Beispiel, verwendet; die hierzu gegebenen Erläuterungen gelten entsprechend.

Für den hermetischen Abschluß des Filtertopfes 16 werden diesmal ebenfalls Plattenventile verwendet, wie sie für das erste Ausführungsbeispiel gemäß der Fig.1 bereits beschrieben wurden. Das dahingehende Plattenventil 36a,b mit den Durchlässen 40a,b sowie der Tellerfeder 42 ist zum Verschließen des Zulaufes 12 in der Fig.5 entsprechend dargestellt. In Zuflußrichtung gesehen ist hinter diesem ersten Plattenventil ein zweites Plattenventil angeordnet, das aus entsprechenden Scheiben 76a,b mit in zwei verschiedenen Ebenen zueinander versetzt angeordneten Durchlässen 78a,b versehen ist. Diesmal stützt sich jedoch die untere festsitzende Scheibe 76b an einem Federelement 80 ab, das in dem dem Winkelprofil 48 entsprechenden Winkelprofil 82 des zweiten Plattenventiles aufgenommen ist. Die Plattenventile 36a,b und 76a,b werden durch das Filterelement 20 aufgesteuert und schließen durch den Kraftspeicher 42, wenn das Filterelement 20 mit dem Filtertopf 16 abgeschraubt wird. Unterstützend drückt hierbei das Federelement 80, gegen die feststehende Scheibe 76b abgestützt, die bewegbare Scheibe 76a über das die Anschläge bildende Winkelprofil 82 in Schließstellung. In Fortbildung der Erfindung und in kinematischer Umkehr können auch die jeweils anderen Scheiben der Platten bewegbar sein und die bisher bewegbaren festsitzen. Ferner sind Kombinationen möglich, bei denen beide Scheiben eines Plattenventiles aufeinander zu - oder voneinander wegbewegt werden, jeweils unter Mithilfe entsprechender Kraftspeicher, vorzugsweise in Form von Tellerfedern.

Im Bereich des Ablaufes 14 ist wiederum die hülsenartige Verdrehsicherung 32 entsprechend den Fig.4,4a eingesetzt und längs des Innenumfanges der Elementaufnahme 18 ist ein weiteres drittes Plattenventil mit den Scheiben 84a,b sowie den entsprechenden Durchlässen 86a,b und einer weiteren Tellerfeder 88 eingesetzt. Die in Fig.5 gesehen zuoberst angeordnete Scheibe 84b mit den Durchlässen 86b ist randseitig in die Elementaufnahme 18 eingesetzt, ebenso wie die Tellerfeder 88. Dazwischen angeordnet ist die unter dem Einfluß der Tellerfeder 88 längsverfahrbare zweite Scheibe 84a mit den Durchlässen 86a. Diese zweite Scheibe 84a verfügt über eine ringartig vorstehende Längsführung 90, die in eine ringförmige Ausnehmung 92 in der anderen Scheibe 84b eingreift. Die vorstehende Längsführung 90 stützt sich an der Unterseite der hülsenartigen Verdrehsicherung 32 ab und wird mithin zu der ersten Scheibe 84b auf Abstand gehalten. Mit dem Entfernen des Filtertopfes 16 schließt sich auch unter dem Einfluß der Tellerfeder 88 das dritte Plattenventil automatisch, indem die untere Ventilscheibe 84a gegen die obere 84b verfahren wird, wobei das zweite und das dritte Plattenventil geschlossen mit dem Filtertopf 16 entfernt werden und das erste geschlossene Plattenventil im Gehäuse 10 verbleibt. Bei dieser Ausführungsform ist der Mittelteil des Plattenventiles geschlossen und weist mithin keine der Ausnehmung 44 vergleichbare Öffnung auf.

Das in der Fig.1 gezeigte Rückschlagventil 56 ist bei dem zweiten Ausführungsbeispiel gemäß der Fig.5 nicht vorhanden. Sollten jedoch Druckspitzen im Ablauf 14 den Einsatz eines dahingehenden Rückschlagventiles notwendig machen, kann dies im Innenraum der Verdrehsicherung 32 bei Bedarf angeordnet werden.

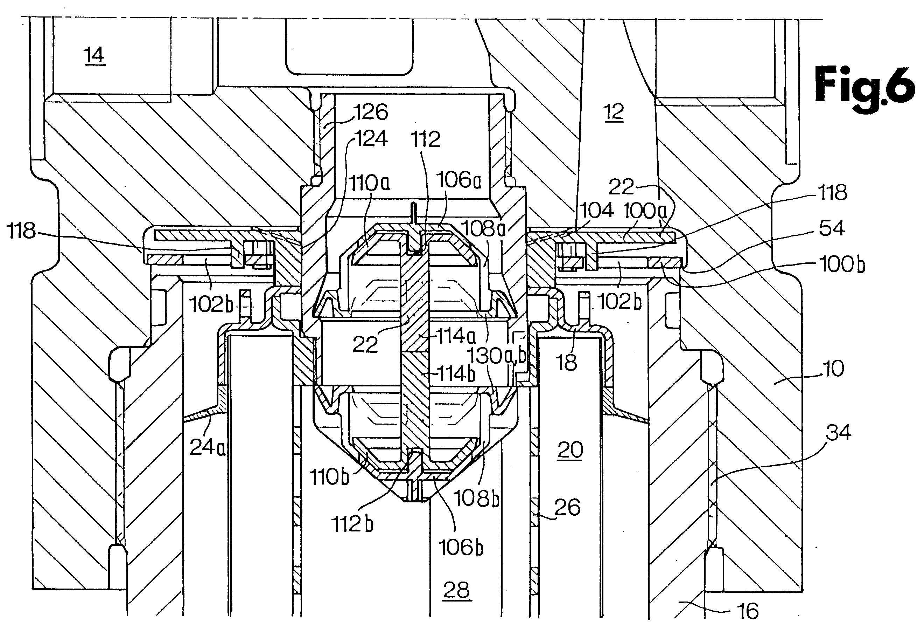

In den Fig. 6ff ist eine weitere Ausführungsform der Filtervorrichtung dargestellt. Zum Verschließen des Einlasses 12 ist wiederum ein Plattenventil mit zwei Schließplatten 100a,b vorgesehen, wobei die in der Fig. 6 unten dargestellte Schließplatte 100b festsitzt und sich längs ihres Außenumfanges an dem Absatz 54 im Gehäuse 10 abstützt. Die obere Schließplatte 100b ist wiederum unter dem Einfluß einer Tellerfeder 104 gegen die untere Schließplatte 100b verfahrbar gehalten.

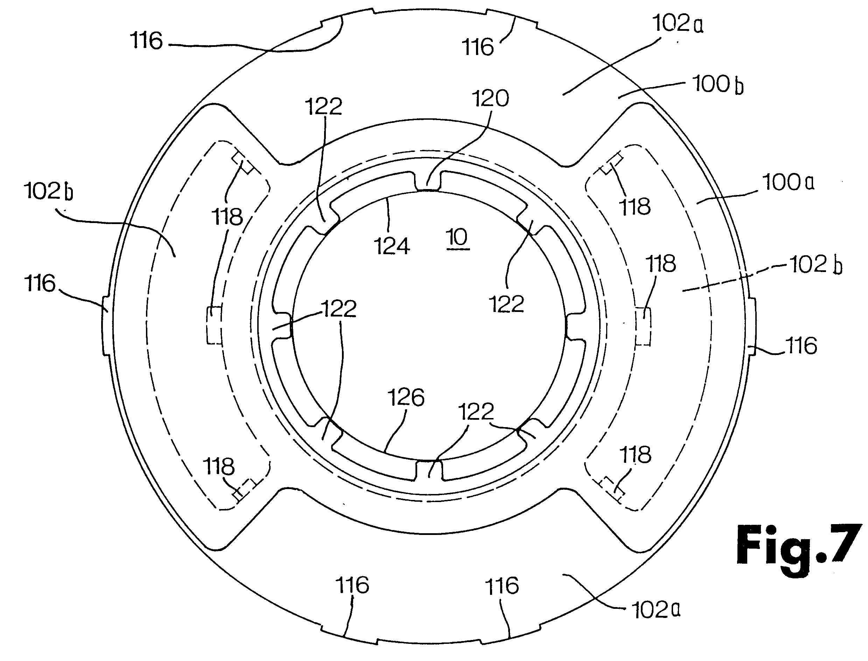

Der nähere Aufbau dieses Plattenventiles ergibt sich aus der Draufsicht in Fig. 7. So ist die obere Schließplatte 100a schmetterlingsartig ausgebildet und ihre beiden Flügel umgrenzen die in einer Ebene mit dieser Platte liegenden beiden Durchlässe 102a, die nach unten hin von der kreisförmigen Scheibe 100b begrenzt und stirnseitig von Gehäuseteilen 10 umfaßt sind. Für die Abstützung der unteren Schließplatte 100b an dem Absatz 54 im Gehäuse 10 weist die Platte 100b, längs ihres Außenumfanges verteilt, Vorsprünge 116 auf. Die beiden Flügel der oberen Schließplatte 100a überdecken vollständig die beiden diametral einander gegenüberliegenden Durchlässe 102b der unteren Schließscheibe 100b.

Zur Bildung einer Längsführung für die Schließplatte 100a weist diese an ihrer Unterseite einzelne vorstehende Stege 118 auf, die in die ihnen zugeordneten Durchlässe 102b in jeder Verfahrstellung der Scheibe 100a eingreifen und sich an den Innenrändern der jeweiligen Ausnehmung 102b abstützen. Längs des Innenumfanges der oberen Scheibe 100a ist diese über einen Führungsring 120 mit nach innen weisenden Führungsansätzen 122 längs einer zylindrischen Führungsfläche 124 geführt, die Teil eines in den Ablauf 14 einschraubbaren Gehäuseeinsatzes 126 ist, der in der Fig. 7 der Einfachheit halber nur mit seiner Außenkante dargestellt ist und der auch vergleichbar der Verdrehsicherung 32 nach den Fig. 4 und 4a ausgebildet sein kann. Mit Entfernen der Elementaufnahme 18 zusammen mit dem Filterelement 20 bewegt sich die obere Schließplatte 100a unter der Wirkung der Ventilfeder 104 in die die Durchlässe 102b verschließende Schließstellung. Hierbei werden synchron die Durchlässe 102a wiederum von der unteren Schließplatte 100b verschlossen. In der geöffneten Stellung des Plattenventiles strömt über den Zulauf 12, die oberen Durchlässe 102a sowie die diametral versetzt angeordneten Durchlässe 102b das Fluid in das Innere des Filtertopfes 16.

Der Ablauf 14 ist bei der Ausführungsform einer Filtervorrichtung nach der Fig. 6 von einer Verschlußeinrichtung 22 verschlossen, die zwei einander umgekehrt gegenüberliegende, aber gleich ausgebildete Abstützteile 106a,b mit Durchgängen 108a,b aufweist, die in Strömungsrichtung des Fluides vom Inneren 28 des Filterelementes 20 zu dem Ablauf 14 hintereinander angeordnet sind. Jedem Abstützteil 106a,b zugeordnet, ist ein Schließteil 110a,b vorhanden, das mittels dem anderen Schließteil, entgegen der Kraft eines Kraftspeichers 112a,b, in seiner die Durchgänge 108a,b freigebenden Stellung gehalten ist (Fig. 6). Mit Entfernen des Filtertopfes 16 verschließt das eine Schließteil 110a den als Ablauf 14 dienenden Anschluß und das andere Schließteil 110b das Innere 28 des Filterelementes 20 gegenüber der Umgebung in fluiddichtender Form. Die Schließstellung der Schließteile 110a,b ist in der Fig. 6 strichliniert wiedergegeben.

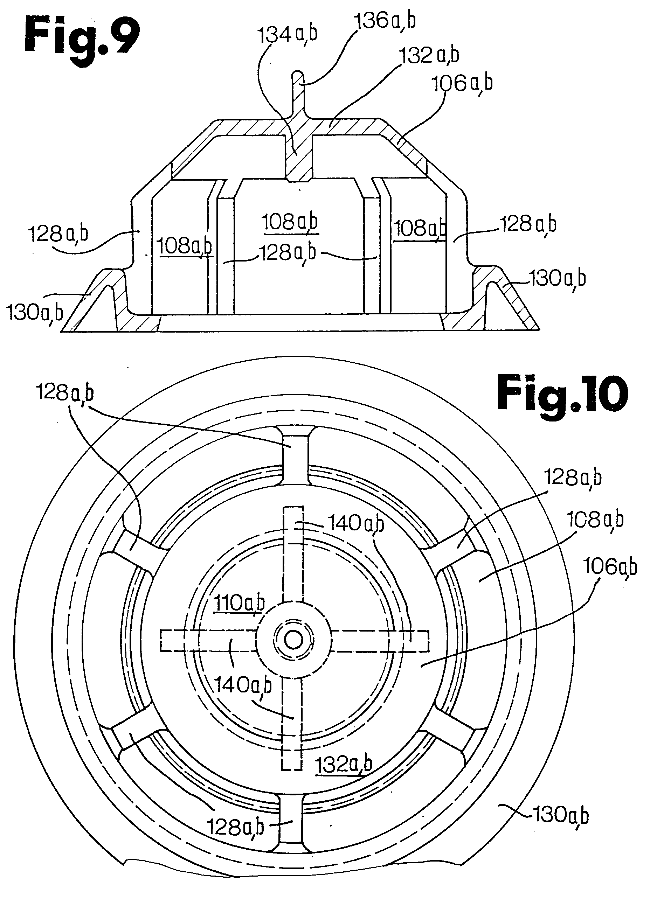

Wie insbesondere die Fig. 9 zeigt, ist das jeweilige Abstützteil 106a,b haubenartig ausgebildet und umfaßt mittels abgeknickter Stege 128a,b die Durchgänge 108a,b. Das jeweilige Abstützteil 106a,b weist eine abgekragte Ringfläche 130a,b auf, die sich mit ihrem freien Außenrand auf einen nach innen vorragenden Vorsprung des Gehäuseeinsatzes 126 (Fig. 6) abstützt. Die jeweilige Ringfläche 130a,b ist über die Stege 128a,b mit der Anlagehaube 132a,b verbunden, die auf ihrer der Ringfläche 130a,b zugewandten Innenseite einen zylindrischen Führungszapfen 134a,b aufweist. Auf der dem jeweiligen Führungszapfen 134a,b abgewandten Seite der jeweiligen Anlagehaube 132a,b ist ein Griffzapfen 136a,b vorhanden, dessen Form sich beim Spritzgießen ergibt, sofern für die Abstützteile 106a,b ein Kunststoffmaterial in Spritzguß zum Einsatz kommt.

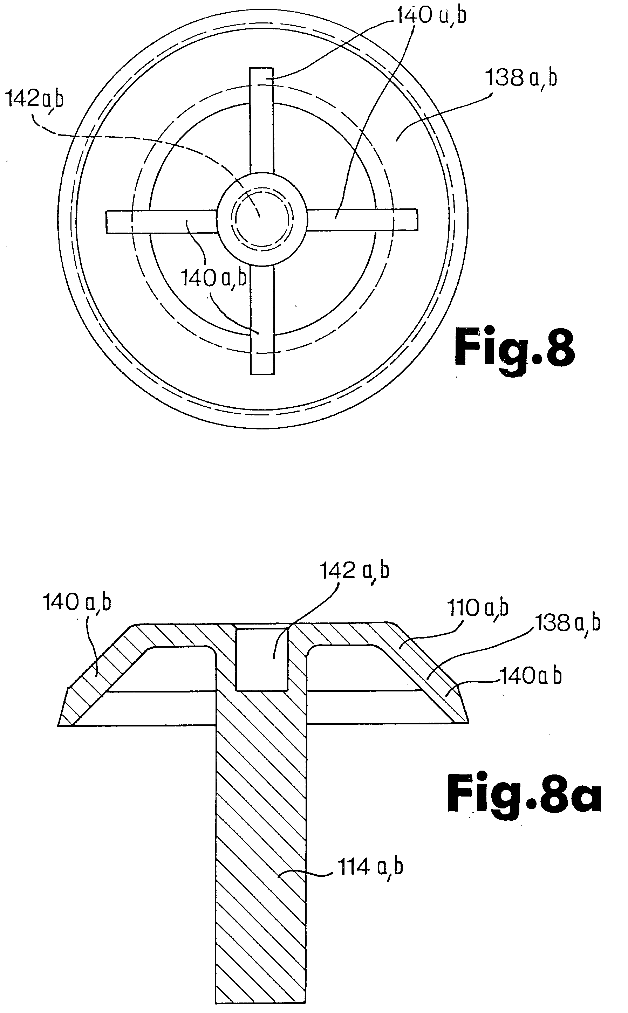

In dem jeweiligen Abstützteil 106a,b ist ein schirmartiges Schließteil 110a,b verfahrbar gehalten, das in den Fig. 8 und 8a näher dargestellt ist. Wie insbesondere die Fig. 8a zeigt, ist das jeweilige, vorzugsweise aus einem Kunststoffmaterial gespritzte Schließteil schirmartig ausgebildet und weist eine zapfenartige Verlängerung 114a,b auf, die bei im Abstützteil 106a,b eingesetztem Schließteil 110a,b über das Abstützteil hinausragt. Der Schirm 138a,b ist über vier einander diametral angeordnete Haltestege 140a,b zur zapfenartigen Verlängerung 114a,b hin abgestützt, wobei die jeweilige Verlängerung 114a,b auf ihrer Oberseite eine zylindrische Ausnehmung 142a,b aufweist, in die der Führungszapfen 134a,b des Abstützteiles 106a,b eingreifen kann. Zwischen dem Führungszapfen 134a,b und der zylindrischen Ausnehmung 142a,b ist jeweils eine Druckfeder (nicht dargestellt) eingesetzt, die einen großen Verfahrweg aufweist, und die im zusammengedrückten Zustand einen äußerst kleinen Bauraum benötigt. Die Draufsicht gemäß der Fig. 10, die die Offenstellung des Verteilers betrifft, zeigt wie das Abstützteil 106a,b das Schließteil 110a,b unter Freilassen der Durchgänge 108a,b umgibt und eine Führung für das Schließteil 110a,b bietet.

Wird der Filtertopf 16 vom Gehäuse 10 abgeschraubt, wird zunächst noch die Berührung der einander zugewandten Verlängerungen 114a,b der Schließteile 110a,b beibehalten und mithin der Schirm 138a,b kontinuierlich in seine in der Fig. 6 strichliniert wiedergegebene Stellung verfahren, bevor endgültig die beiden Verlängerungen 114a,b außer Eingriff miteinander kommen. Ist das jeweilige Schließteil 110a,b in seiner Schließstellung liegt der untere Rand des Schirmes 138a,b auf dem nach innen vorkragenden Rand der Ringfläche 130a,b des Abstützteiles 106a,b. In dieser Schießstellung sind die jeweiligen Durchgänge 108a,b hermetisch verschlossen. Wird nach Austausch des Filterelementes 20 der Filtertopf 16 wieder in seiner Anschlußstelle im Gehäuse 10 nach der Darstellung in der Fig. 6 verbracht, erfolgt in umgekehrter Weise über die Verlängerungen 114a,b des jeweiligen Schließteiles 110a,b deren Aufsteuervorgang in die Offenstellung des mittig angeordneten beidseitig wirkenden Haubenventiles.

Die erfindungsgemäße Filtervorrichtung kann eine Reversierventil- oder Bypassventileinheit aufweisen, was jedoch bei dahingehenden Vorrichtungen üblich ist, so daß an dieser Stelle hierauf nicht mehr näher eingegangen wird. Anstelle des in der Fig.1 gezeigten Verschlußstopfens 94 können elektronisch arbeitende Anschlußteile eingesetzt werden, die unter anderem Auskunft geben über die Druck- und Verschmutzungsverhältnisse im Zulauf 12 sowie im Ablauf 14.

## Patentansprüche

1. Filtervorrichtung mit einem Anschlüsse für ein Fluid aufweisenden Gehäuse (10), das mit einem Filtertopf (16) verbindbar ist, der mindestens ein von einer Elementaufnahme (18) festgehaltenes Filterelement (20) aufweist, und mit einer Verschlußeinrichtung (22), die einen ungewollten Fluidaustritt verhindert, dadurch gekennzeichnet, daß die Verschlußeinrichtung (22) mindestens zwei Schließplatten (36a,b;76a,b;84a,b;100a,b) aufweist, die in zwei verschiedenen Ebenen zueinander versetzt angeordnete Durchlässe (40a,b;78a,b;86a,b;102a,b) zumindest teilweise begrenzen, und die unter der Einwirkung eines Kraftspeichers (42;80;88;104) zwecks Verschließen der Durchlässe (40a,b;78a,b;86a,b;102a,b) derart aufeinander zubewegbar sind, daß mit zunehmender Trennung des Filtertopfes (16) vom Gehäuse (10) die Schließplatten kontinuierlich mindestens einen der Anschlüsse und/oder den Filtertopf (16) gegenüber der Umgebung dichtend verschließen.

2. Filtervorrichtung nach Anspruch 1, dadurch gekennzeichnet, daß jeweils eine der beiden Schließplatten (36b,76b,84b,100b) der Verschlußeinrichtung (22) feststeht und die jeweils andere Schließplatte (36a,76a,84a,100a) unter dem Einfluß des jeweiligen Kraftspeichers (42,80,88,104) bewegbar angeordnet ist.

3. Filtervorrichtung nach Anspruch 1 oder 2, dadurch gekennzeichnet, daß jeweils eine der beiden Schließplatten (36b,76b,84b) randseitig eine Längsführung für die jeweils andere bewegbar gehaltene Schließplatte (36a,76a,84a) aufweist.

4. Filtervorrichtung nach einem der Ansprüche 1 bis 3, dadurch gekennzeichnet, daß die Verschlußeinrichtung (22) ein Rückschlagventil (56) aufweist, das im als Ablauf (14) dienenden Anschluß eingesetzt ist, und das während des Filtriervorganges öffnet und mit dem Entfernen des Filtertopfes (16) automatisch schließt.

5. Filtervorrichtung nach Anspruch 4, dadurch gekennzeichnet, daß das Rückschlagventil (56) sich auf einem Mehrbeim, insbesondere auf einem Dreibein (58) abstützt, das mit dem Gehäuse (10) verbunden ist, und das zwischen seinen Beinen jeweils eine Durchtrittsstelle (70) aufweist.

6. Filtervorrichtung nach Anspruch 1 oder 2, dadurch gekennzeichnet, daß die Verschlußeinrichtung (22) zwei Abstützteile (106a,b) mit Durchgängen (108a,b) aufweist, die in Strömungsrichtung des Fluides hintereinander angeordnet sind, daß jedem Abstützteil (106a,b) zugeordnet ein Schließteil (110a,b) vorhanden ist, das mittels dem anderen Schließteil, entgegen der Kraft eines Kraftspeichers (112a,b), in seiner die Durchgänge (108a,b) freigebenden Stellung gehalten ist, und daß mit Entfernen des Filtertopfes (16) das eine Schließteil (110a) den als Ablauf (14) dienenden Anschluß und das andere Schließteil (110b) das Innere (28) des Filterelementes (20) gegenüber der Umgebung dichtend verschließt.

7. Vorrichtung nach Anspruch 6, dadurch gekennzeichnet, daß das jeweilige Abstützteil (106a,b) haubenartig das jeweils ihm zugeordnete schirmartige Schließteil (110a,b) umschließt, das eine zapfenartige Verlängerung (114a,b) aufweist, die über das Abstützteil (106a,b) hinausragt, und die zumindest teilweise bis zum vollständigen Erreichen der Schließstellung unter der Einwirkung des Kraftspeichers (112a,b) in Anlage mit der zapfenartigen Verlängerung des anderen Schließteiles gehalten ist.

8. Filtervorrichtung nah einem der Ansprüche 1 bis 7, dadurch gekennzeichnet, daß die Verschlußeinrichtung (22) mindestens eine elastisch nachgiebige Ringdichtung, insbesondere in Form von Dichtlappen (24a,b) aufweist, die zwischen der Elementaufnahme (18) und dem Filtertopf (16) sowie der Elementaufnahme (18) und dem Filterelement (20) endseitig festgelegt sind.

9. Filtervorrichtung nach einem der Ansprüche 1 bis 8, dadurch gekennzeichnet, daß für das jeweilige Filterelement (20) die Elementaufnahme (18) eine Formschlußverbindung mit Teilen des Gehäuses (10) über eine Verdrehsicherung (32) eingeht.

10. Filtervorrichtung nach Anspruch 9, dadurch gekennzeichnet, daß die Formschlußverbindung mindestens einen Vorsprung oder eine Ausnehmung an der Elementaufnahme (18) aufweist, die jeweils in eine zugeordnete Ausnehmung bzw. in einen Vorsprung (74) der Verdrehsicherung (32) eingreift.

## Claims

1. Filter device with a housing (10) comprising connections for a fluid, which housing (10) can be connected to a filter cup (16), which comprises at least one filter element (20) fixed by an element holder (18), and with a closure device (22), which prevents an unwanted escape of fluid, characterised in that the closure device (22) comprises at least two closing plates (36a, b; 76a, b; 84, b; 100a, b), which in two different planes at least partly define openings (40a, b; 78a, b; 86a, b; 102a, b) staggered with respect to each other and which can be moved towards each other under the action of an accumulator (42; 80; 88; 104) for the purpose of closing the openings (40a, b; 78a, b; 86a, b; 102a, b) so that with an increasing separation of the filter cup (16) from the housing (10), the closing plates continuously close at least one of the connections and/or the filter cup (16) hermetically with respect to the atmosphere.

2. Filter device according to Claim 1, characterised in that respectively one of the two closing plates (36b, 76b, 84b, 100b) of the closure device (22) is stationary and the respective other closing plate (36a, 76a, 84a, 100a) is arranged to move under the influence of the respective accumulator (42, 80, 88, 104).

3. Filter device according to Claim 1 or 2, characterised in that respectively one of the two closing plates (36b, 76b, 84b) comprises on its edge a longitudinal guide for the respective other movably held closing plate (36a, 76a, 84a).

4. Filter device according to one of Claims 1 to 3, characterised in that the closure device (22) comprises a non-return valve (56), which is inserted in the connection serving as an outlet (14), and which opens during the filtering process and closes automatically with the removal of the filter cup (16).

5. Filter device according to Claim 4, characterised in that the non-return valve (56) is supported on a multiple leg, in particular on a tripod (58), which is connected to the housing (10) and between its legs comprises respectively one passage (70).

6. Filter device according to Claim 1 or 2, characterised in that the closure device (22) comprises two support parts (106a, b) with passages (108a, b), which are arranged one behind the other in the direction of flow of the fluid, that a closing part (110a, b) is provided, which is associated with each support part (106a, b), which is held by means of the other closing part, against the force of an accumulator (112a, b), in its position releasing the passages (108a, b), and that with the removal of the filter cup (16), one closing part (110a) hermetically closes the connection serving as the outlet (14) and the other closing part (110b) hermetically closes the inside (28) of the filter element (20) with respect to the atmosphere.

7. Device according to Claim 6, characterised in that the respective support part (106a, b) surrounds the umbrella-shaped closing part (110a, b) associated respectively therewith, in the manner of a cap, which closing part (110a, b) comprises a journal-like extension (114a, b), which projects beyond the support part (106a, b) and which at least partly until the closing position is completely reached, is held under the action of the accumulator (112a, b) in abutment with the journal-like extension of the other closing part.

8. Filter device according to one of Claims 1 to 7, characterised in that the closure device (22) comprises at least one elastically resilient annular seal, in particular in the form of sealing flaps (24a, b), which are fixed on the end side between the element holder (18) and the filter cup (16) as well as the element holder (18) and the filter element (20).

9. Filter device according to one of Claims 1 to 8, characterised in that for the respective filter element (20), the element holder (18) enters into a form-locking connection with parts of the housing (10) by way of means (32) for protection against torsion.

10. Filter device according to Claim 9, characterised in that the form-locking connection comprises at least one projection or recess on the element holder (18), which engages respectively in an associated recess or in a projection (74) of the means (32) for protection against torsion.

## Revendications

1. Dispositif de filtration muni d'un boîtier (10) présentant des branchements pour un fluide, qui peut être relié à un pot filtrant (16) présentant au moins un élément filtrant (20) maintenu par un logement de filtre (10), et d'un système de fermeture (22) qui empêche une sortie de fluide intempestive, caractérisé en ce que le système de fermeture (22) présente au moins deux plaques de fermeture (36a,b; 76a,b;84a,b;100a,b) qui délimitent au moins partiellement des passages (40a,b;78a,b;86a,b;102a,b) disposés sur deux niveaux différents et décalés, et qui peuvent être déplacées l'une au-dessous de l'autre et l'une vers l'autre sous l'effet d'un accumulateur d'énergie (42;80;88;104) pour la fermeture des passages (40a,b;78a,b;86a,b;102a,b) de telle façon que les plaques de fermeture ferment en continu au moins l'un des branchements et/ou le pot filtrant (16) de façon étanche par rapport à l'environnement au fur et à mesure que le pot filtrant (16) se détache du boîtier (10).

2. Dispositif de filtration selon la revendication 1, caractérisé en ce que respectivement l'une des deux plaques de fermetures (36b,76b,84b,100b) du système de fermeture (22) est fixe et l'autre plaque de fermeture (36a,76a,84a,100a) est disposée de façon mobile sous l'influence de l'accumulateur d'énergie (42,80,88,104) respectif.

3. Dispositif de filtration selon la revendication 1 ou 2, caractérisé en ce que respectivement l'une des deux plaques de fermeture (36b,76b,84b) présente du côté du bord un guide longitudinal pour l'autre plaque de fermeture (36a,76a,84a) maintenue de façon mobile.

4. Dispositif de filtration selon l'une quelconque des revendications 1 à 3, caractérisée en ce que le système de fermeture (22) présente un clapet anti-retour (56) qui est inséré dans le branchement servant d'écoulement (14) et qui s'ouvre pendant l'opération de filtration et ferme automatiquement avec l'enlèvement du pot filtrant (16).

5. Dispositif de filtration selon la revendication 4, caractérisé en ce que le clapet anti-retour (56) s'appuie sur un dispositif à plusieurs pieds, en particulier sur un trépied (58), qui est relié au boîtier (10) et qui présente respectivement un point de passage (110) entre ses pieds.

6. Dispositif de filtration selon la revendication 1 ou 2, caractérisé en ce que le système de fermeture (22) présente deux pièces d'appui (106a,b) avec des passages (108a,b) qui sont disposées l'une derrière l'autre dans le sens d'écoulement du fluide, en ce qu'à chaque pièce d'appui (106a,b) est affectée une pièce de fermeture (110a,b) qui est maintenue au moyen de l'autre partie de fermeture, contrairement à la force d'un accumulateur d'énergie (112a,b), dans sa position libérant les passages (108a,b), et en ce que, avec l'enlèvement du pot filtrant (16), une des pièces de fermeture (110a) obture le branchement servant d'écoulement (14) et l'autre pièce de fermeture (110b) obture l'intérieur (28) de l'élément filtrant (20) de façon étanche par rapport à l'environnement.

7. Dispositif selon la revendication 6, caractérisé en ce que la pièce d'appui (106a,b) respective entoure à la façon d'un chapeau la pièce de fermeture (110a,b) en forme d'écran qui lui est attribuée et présente un prolongement (114a,b) en forme de tenon qui dépasse de la pièce d'appui (106a,b) et est maintenu au moins partiellement, jusqu'à l'obtention complète de la position de fermeture sous l'effet de l'accumulateur d'énergie (112a,b) en appui avec le prolongement en forme de tenon de l'autre partie de fermeture.

8. Dispositif de filtration selon l'une quelconque des revendications 1 à 7, caractérisé en ce que le système de fermeture (22) présente au moins un joint annulaire souple et élastique, en particulier sous la forme de pattes d'étanchéité (24a,b) qui sont fixées sur une extrémité entre le logement d'élément (18) et le pot filtrant (16) ainsi qu'entre le logement d'élément (18) et l'élément filtrant (20).

9. Dispositif de filtration selon l'une quelconque des revendications 1 à 8, caractérisé en ce que, pour l'élément filtrant (20) concerné, le logement d'élément (18) présente un assemblage mécanique avec des parties du boîtier (10) au moyen d'une sécurité anti-torsion (32).

10. Dispositif de filtration selon la revendication 9, caractérisé en ce que l'assemblage mécanique présente au moins une partie avancée ou un évidement sur le logement d'élément (18) qui s'engage respectivement dans un évidement attribué ou dans une partie saillante (74) de la sécurité anti-torsion (32).
